# EUROPEAN PATENT SPECIFICATION

(11) **EP 3 287 301 B1**
(45) Date of publication and mention of the grant of the patent: **07.08.2019**
(21) Application number: 16783160.1
(22) Date of filing: 19.04.2016
(51) Int. Cl.: B60C 11/16

(54) **STUD AND TIRE**
SPIKE UND REIFEN
CLOU ET PNEU

(30) Priority: 20.04.2015 JP 2015086279
(43) Date of publication of application: 28.02.2018
(73) Proprietor: Bridgestone Corporation, Tokyo 104-8340 (JP)
(72) Inventor: SAWADA, Hiroki, Tokyo 104-8340 (JP); WADA, Junichiro, Tokyo 104-8340 (JP)
(74) Representative: Oxley, Robin John George
(86) International application number: PCT/JP2016/062404
(87) International publication number: WO 2016/171139

(56) References cited:
- WO-A1-2014/072853
- CN-A- 101 269 613
- JP-A- 2002 120 517
- JP-A- 2014 180 952
- RU-C1- 2 148 498
- US-A1- 2004 231 775

## Description

### BACKGROUND OF THE INVENTION

### 1. Field of the Invention

The present invention relates to a stud to be fitted in a stud recess formed on the tread surface side of a tire and a tire having the studs fitted in the stud recesses formed on the tread surface side thereof.

### 2. Description of the Related Art

There is a known stud to be fitted in a stud recess (hole) formed on a surface side of the tire tread, which has a columnar body section (thick portion and neck portion), a pin section (projection) provided on one end in the direction along the central axis of the body section, and a flange section (root portion) provided on the other end in the direction along the central axis of the body section. And the body section is so formed as to have a longer direction and a short direction orthogonal to the central axis thereof, the pin section is so formed as to have a longer direction and a short direction orthogonal to the central axis thereof, and the flange section is so formed as to have a longer direction and a short direction orthogonal to the central axis thereof. And studs are fitted on the tire in such a manner that the longer direction of the pin section faces in the same direction as the axial direction of the tire. This improves the ice braking performance, since the edge components of the pin section (tire axial components of the pin section) become larger when the vehicle fitted with these tires travels straight ahead (see Patent Document 1).

### RELATED ART DOCUMENT

### Patent Document

Patent Document 1: Japanese Patent No. 4088055
Reference is also made to WO 2014/072853 which discloses a stud according to the preamble of Claim 1 and also to RU 2148498.

### SUMMARY OF THE INVENTION

### Problem to be Solved by the Invention

However, the stud as disclosed in Patent Document 1 is of such a constitution that the longer direction of the pin section and the longer direction of the body section face in the same direction and the longer direction of the pin section and the body section faces in a direction different from the longer direction of the flange section. And the studs are fitted in the stud recesses in the tire in such orientation that the longer direction of the pin section faces in the same direction as the axial direction of the tire, and the longer direction of the flange section faces in the same direction as the circumferential direction of the tire. Consequently, the longer direction of the flange section and the short direction of the body section face in the same direction as the circumferential direction of the tire.

In this case, in the circumferential direction of the tire, there will be greater difference between the length in the longer direction (major axis dimension) of the flange section and the length in the short direction (minor axis dimension) of the body section. A greater difference in axis dimension like this results in not only smaller contact area between the upper part (thick portion) of the body section and the inner wall (tire rubber) of the stud recess, but also larger gap between the upper part of the body section and the inner wall of the stud recess. This will make the contact area between the lower part (neck portion) of the body section and the inner wall of the stud recess smaller, which in turn will allow easier loss of the stud from the stud recess, causing a decline in anti-stud-loss performance.

The present invention provides a stud and a tire fitted with such studs capable of improving both ice braking performance and anti-stud-loss performance.

### Means for Solving the Problem

A stud according to the present invention is a stud to be fitted in a stud recess (hole) formed on the tread surface side of a tire. The stud has a body section in a columnar shape, a pin section disposed on one end in the direction along the central axis of the body section, and a flange section disposed on the other end in the direction along the central axis of the body section. And the body section is so formed as to have a longer direction and a short direction orthogonal to the central axis thereof, the pin section is so formed as to have a longer direction and a short direction orthogonal to the central axis thereof, and the flange section is so formed as to have a longer direction and a short direction orthogonal to the central axis thereof. And the longer direction of the pin section faces in the same direction as the longer direction of the flange section, and the longer direction of the pin section and the flange section faces in a direction different from the longer direction of the body section. Accordingly, the stud provided features both improved ice braking performance and improved anti-stud-loss performance.

### BRIEF DESCRIPTION OF THE DRAWINGS

FIG. 1 is a perspective view of a stud (first embodiment).
FIG. 2A is a plan view of a stud, and FIG. 2B is a front view of a stud (first embodiment).
FIG. 3 is a cross-sectional view showing a tire with studs fitted in stud recesses (first embodiment).
FIG. 4 is an illustration showing a tread surface of a tire with studs fitted in stud recesses (first embodiment).
FIG. 5 is a table showing test results (first embodiment).
FIG. 6 is a perspective view of a stud (second embodiment).
FIG. 7A is a plan view of a stud, and FIG. 7B is a front view of a stud (second embodiment).
FIG. 8 is a perspective view of a stud (third embodiment).
FIG. 9 is a perspective view of a stud (fourth embodiment).

### BEST MODE FOR CARRYING OUT THE INVENTION

### First Embodiment

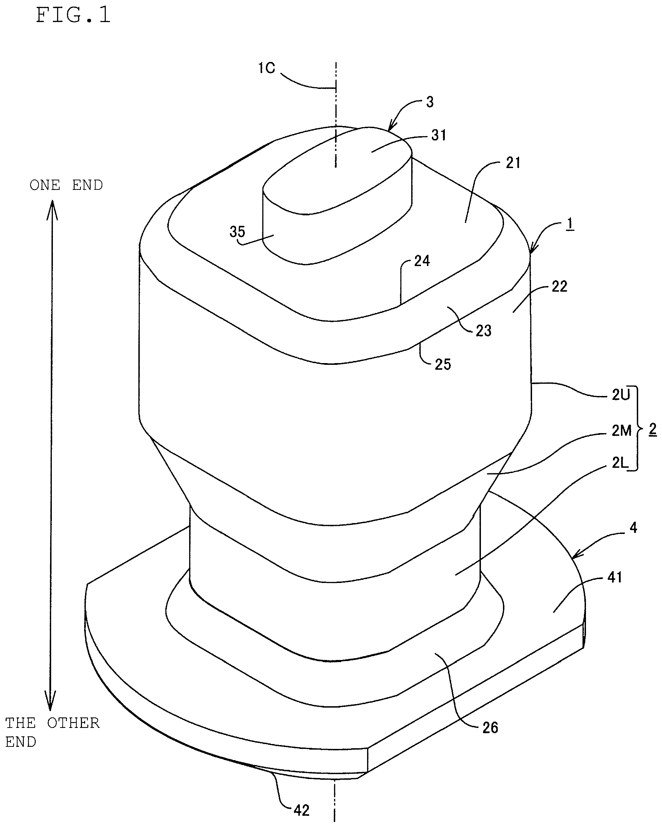

With reference to FIGS. 1 to 5, a description is given of a stud according to a first embodiment to be fitted in a stud recess (hole) formed on the tread surface side of a tire and a tire with such studs fitted in the stud recesses formed on the tread surface side thereof.

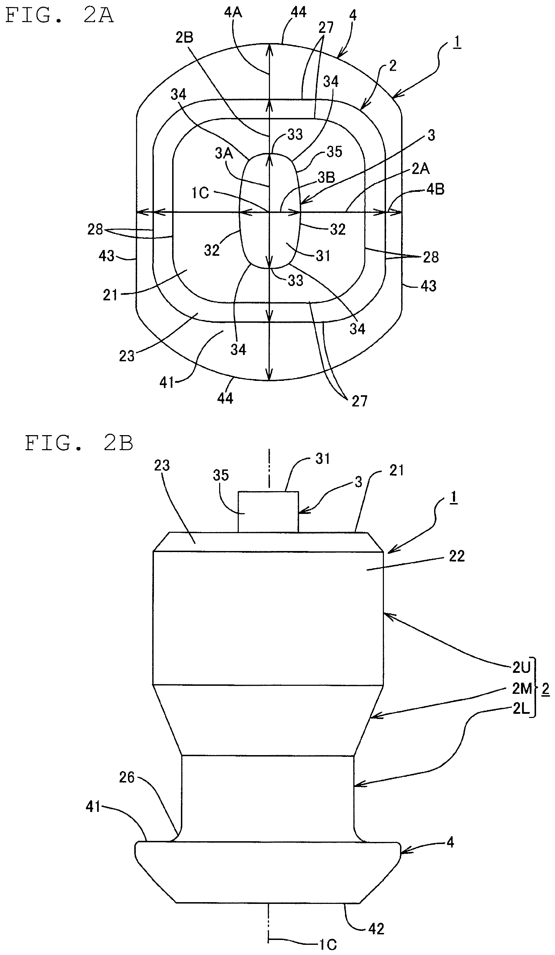

As shown in FIG. 1 and FIG. 2, a stud 1, constructed of a body section 2, a pin section 3 (sometimes called a tip) disposed on one end in the direction along the central axis of the body section 2, and a flange section 4 disposed on the other end in the direction along the central axis of the body section 2, is a columnar member extending in the direction along the central axis of the body section 2.

The stud according to the first embodiment is of such construction that the central axis of the body section 2, the central axis of the pin section 3, and the central axis of the flange section 4 are all in alignment with each other. In the following description, the central axis of the stud 1, the central axis of the body section 2, the central axis of the pin section 3, and the central axis of the flange section 4 will all be referred to as the central axis 1C.

It is to be noted that the central axis 1C is the center line extending in the direction of extension of the stud 1 through the center of the cross section thereof orthogonal to the extension direction thereof which is the direction of the stud 1 embedded in the tire.

As shown in FIG. 1 and FIG. 2, the body section 2 has an upper part 2U positioned on one-end side in the direction along the central axis 1C, a lower part 2L positioned on the other-end side in the direction along the central axis 1C, a middle part 2M connecting the upper part 2U and the lower part 2L.

A border portion 23 between the one-end surface 21 in the direction along the central axis 1C of the upper part 2U and the peripheral surface 22 of the columnar body of the upper part 2U is formed into a flat surface connecting the peripheral edge of the one-end surface 21 and the one-end side peripheral edge 25 of the peripheral surface 22, for instance.

That is, the upper part 2U is formed into a columnar body with an equal sectional shape orthogonal to the central axis 1C for the whole length along the central axis 1C except on the one-end surface 21 side thereof.

The lower part 2L has a border portion 26 between the other end in the direction along the central axis 1C and the one-end surface 41 in the direction along the central axis 1C of the flange section 4, which is formed into an arcing surface curving relative to the central axis 1C, for instance.

That is, the lower part 2L is formed into a columnar body with an equal sectional shape orthogonal to the central axis 1C for the whole length along the central axis 1C except on the other-end side thereof.

The relationship between the sectional lengths of the upper part 2U and the sectional lengths of the lower part 2L is such that sectional lengths of the upper part 2U > sectional lengths of the lower part 2L.

The middle part 2M is formed into a tapered columnar body with the lengths of the sectional shape getting gradually shorter from the upper part 2U side to the lower part 2L side.

The body section 2 is so formed that the shape orthogonal to the central axis 1C thereof has a longer direction (direction along the major axis) orthogonal to the central axis 1C thereof and a short direction (direction along the miner axis) orthogonal to the central axis 1C thereof.

That is, the upper part 2U of the body section 2 is so formed that the sectional shape orthogonal to the central axis 1C and the shape of the one-end surface 21 in the direction along the central axis 1C are rectangular with the corners thereof rounded into circular arcs as shown in FIG. 2A, for instance.

Similarly, the middle part 2M of the body section 2 is so formed that the sectional shape orthogonal to the central axis 1C is rectangular with the corners thereof rounded into circular arcs.

That is, the body section 2 is formed into a shape having the contour lines of the shape orthogonal to the central axis 1C with a pair of long sides 27, 27 symmetrical with respect to the major axis 2A of the rectangle as the line of symmetry and a pair of short sides 28, 28 symmetrical with respect to the miner axis 2B of the rectangle as the line of symmetry, as shown in FIG. 2A.

The pin section 3 is formed into a columnar body with nearly equal sectional shape orthogonal to the central axis 1C for the whole length along the central axis 1C (More precisely, it is formed into a tapered columnar body with the axis lengths of the sectional shape getting gradually shorter from the one-end side (one-end surface 31 side) of the central axis 1C to the other-end side of the central axis.).

The pin section 3 is so formed that the shape thereof orthogonal to the central axis 1C has a longer direction and a short direction thereof.

The pin section 3 comes with the sectional shape orthogonal to the central axis 1C and the shape of the one-end surface 31 in the direction along the central axis 1C having straight sides 33, 33 parallel with the miner axis 3B at the respective ends of the major axis 3A as shown in FIG. 2A, for instance. That is, the shape is a cross between an ellipse and a rectangle, which is so to speak a "rice bale" as viewed from the side.

In other words, the pin section 3 is formed into a shape having the contour lines of the shape orthogonal to the central axis 1C with a pair of long arcs 32, 32 symmetrical with respect to the major axis 3A as the line of symmetry, a pair of straight lines 33, 33 symmetrical with respect to the miner axis 3B as the line of symmetry, and short arcs 34, ... connecting the end of the long arc 32 and the straight line 33, as shown in FIG. 2A. It is to be noted that the arrangement is such that curvature of short arc 34 > curvature of long arc 32.

The area of the cross section orthogonal to the central axis 1C and the sectional area of the one-end surface 31 in the direction along the central axis 1C of the pin section 3 are both smaller than the area of the one-end surface 21 of the body section 2.

Also, the pair of long arcs 32, 32 forming borders between the one-end surface 31 and the peripheral surface 35 of the pin section 3, the pair of straight lines 33, 33, and the four short arcs 34, ... forming borders between the long arc 32 and the straight line 33 (see FIG. 2A) form the edges of the pin section 3.

The flange section 4 is formed into a tapered columnar body with the axis lengths of the sectional shape orthogonal to the central axis 1C getting gradually shorter from the one-end side (body section 2 side) of the central axis 1C to the other-end side of the central axis 1C (see FIG. 2B).

The flange section 4 is so formed that the shape thereof orthogonal to the central axis 1C has a longer direction and a short direction orthogonal to the central axis 1C thereof.

The flange section 4 comes with the sectional shape orthogonal to the central axis 1C and the shape of the one-end surface 41 and the other-end surface (bottom surface) 42 in the direction along the central axis 1C shaped like a track in an athletic field as shown in FIG. 2A.

That is, the flange section 4 is formed into a shape orthogonal to the central axis 1C having the contour line with a pair of straight lines 43, 43 symmetrical with respect to the major axis 4A as the line of symmetry and a pair of circular arcs 44, 44 symmetrical with respect to the miner axis 4B as the line of symmetry as shown in FIG. 2A.

The flange section 4 is so formed that the area of the one-end surface 41 positioned on one-end side in the direction along the central axis 1C and the sectional area thereof on the one-end surface 41 side are both larger than the maximum sectional area of the body section 2. Also, the area of the bottom surface, which is the other-end surface 42 in the direction along the central axis 1C, is about the same as the sectional area of the body section 2.

It is to be noted that the longer direction (direction along the major axis) is the direction in which the major axes 2A, 3A, 4A pass through the central axis 1C in the shape described above and the short direction (direction along the miner axis) is the direction in which the miner axes 2B, 3B, 4B pass through the central axis 1C in the shape described above.

And as shown in FIG. 2A, the arrangement is such that the longer direction (extension direction of the major axis 3A) of the pin section 3 and the longer direction (extension direction of the major axis 4A) of the flange section 4 face in the same direction, and the longer direction (extension direction of the major axes 3A and 4A) of the pin section 3 and the flange section 4 faces in a different direction from the longer direction (extension direction of the major axis 2A) of the body section 2.

It is to be noted that the longer direction of the pin section 3 facing in the same direction as the longer direction of the flange section 4 in this invention means a complete agreement between the longer direction of the pin section 3 and the longer direction of the flange section 4 as shown in FIG. 2A. And additionally, it means that the intersecting angle between the longer direction of the pin section 3 and the longer direction of the flange section 4, that is, the intersecting angle between the major axis 3A of the pin section 3 in the sectional shape orthogonal to the central axis 1C and the major axis 4A of the flange section 4 in the sectional shape orthogonal to the central axis 1C, is 20° or smaller.

Also, the longer direction of the pin section 3 and the flange section 4 facing in a different direction from the longer direction of the body section 2 means an arrangement in which the intersecting angle between the longer direction of the flange section 4 and the longer direction of the body section 2 is 90° . And additionally, it means that the intersecting angle between the longer direction of the flange section 4 and the longer direction of the body section 2 is smaller than 90° and larger than 20° . The intersecting angle is preferably 70° or greater and more preferably 90° (orthogonal) for improvement in anti-stud-loss performance.

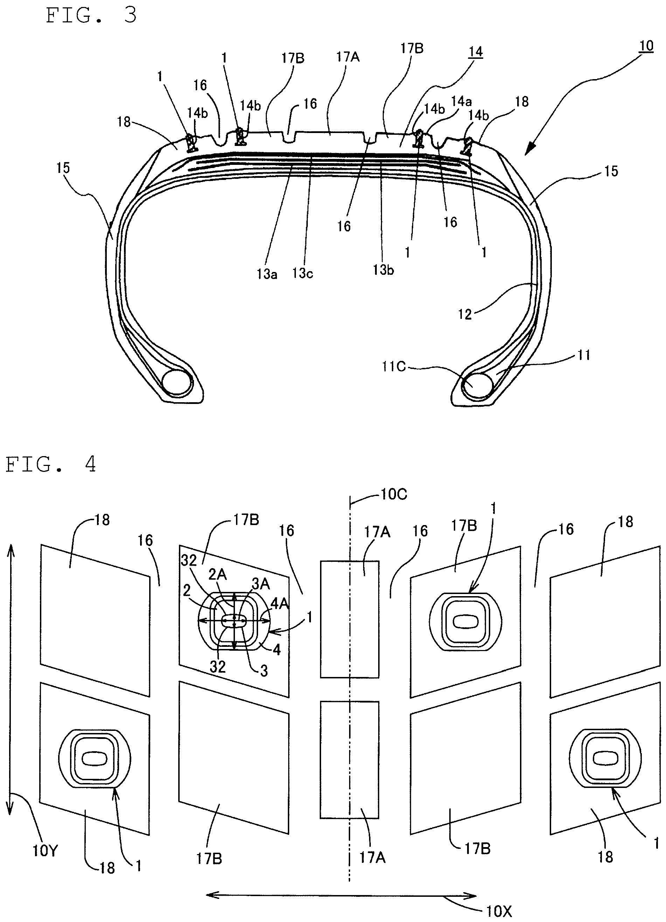

With reference to FIG. 3, a description is give of a tire 10, designated as a studdable tire or a studded tire, with studs 1 embedded in stud recesses 14b formed in the tread 14.

The tire 10 includes bead regions 11, bead cores 11C, a carcass layer 12, belt layers 13a, 13b, a belt protection layer 13c, sidewalls 15, and studs 1.

The carcass layer 12 is a skeletal member of the tire 10 provided toroidally astride a pair of bead cores 11C disposed within the bead regions 11. Disposed on the radially outside of the crown region of the carcass layer 12 are an inner belt layer 13a and an outer belt layer 13b, for instance. The belt layers 13a, 13b are each made of steel cords or cords of stranded organic fibers crossing each other at an angle of 20 to 70 degrees with respect to the equatorial line 10C of the tire (see FIG. 4).

The tread 14 is a rubber member (tread rubber) disposed radially outside of the belt layer 13b. Formed on the surface 14a of the tread 14 are a plurality of main grooves 16 extending along the circumferential direction 10Y of the tire (see FIG. 4). And a plurality of land portions (blocks) 17A, 17B, 18 are defined by these main grooves 16. The land portions 17A are the central land portions located in the tread center region of the tire, the land portions 17B are the outer land portions each located outside of the land portions 17A in the axial direction 10X of the tire (see FIG. 4), and the land portions 18 are the shoulder land portions each located outside of the outer land portions 17B in the axial direction 10X of the tire.

The sidewalls 15 are each a rubber member covering the carcass layer 12 by extending in the tire side region from the end of the tread 14.

Disposed between the tread 14 and the outer belt layer 13b is the belt protection layer 13c. The belt protection layer 13c is constructed of cords of organic fibers or the like.

Formed on the surface side of the tread 14 are stud recesses 14b, and studs 1 are embedded in the stud recesses 14b. The stud recesses 14b are disposed in the shoulder land portions 18 and the outer land portions 17B.

As shown in FIG. 3, the stud recess 14b is formed into a cylindrical bottomed hole, for instance, extending from the surface 14a of the tread 14 of the tire toward the center of the tire circle.

The stud recess 14b has an entry portion, a bottom portion, and a middle portion connecting the entry portion with the bottom portion, for instance.

The entry portion, the bottom portion, and the middle portion are formed concentrically around the central axis of the stud recess 14b.

The middle portion is a cylindrical hole with a fixed diameter, for instance.

The entry portion is a funnel-shaped hole portion surrounded by a tapered surface (conical surface having the center line of the hole of the stud recess 14b as the center line) whose diameter increases from the entry-side end of the middle portion toward the surface 14a of the tread 14.

The bottom portion is a bottomed hole portion surrounded by a surface whose diameter first increases from the bottom-side end of the circular-shaped middle portion toward the center of the tire circle and then decreases toward the bottom.

It is to be noted, however, that the bottom-side shape of the bottom portion is preferably of a shape fitting the shape of the flange section 4 of the stud 1 in order to improve the anti-stud-loss performance.

The studs 1 are embedded in the stud recesses 14b as they are driven with the flange section 4 side thereof first into the stud recesses 14b by a not-shown stud-driving machine.

The height dimension of the stud 1 is designed to be greater than the depth dimension of the stud recess 14b. And the stud is installed such that the pin section 3 protrudes above the surface 14a of the tread 14.

On the tire 10 according to the first embodiment, the studs 1 are fitted in the stud recesses 14b such that, for example as shown in FIG. 4, the longer direction (extension direction of the major axes 3A and 4A) of the pin section 3 and the flange section 4 faces in the same direction as the tire axial direction 10X (direction parallel to the central axis of the tire and orthogonal to the equatorial line 10C) and the longer direction (extension direction of the major axis 2A) of the body section 2 faces in the same direction as the tire circumferential direction 10Y.

It is to be noted that the longer direction of the pin section 3 and the flange section 4 facing in the same direction as the tire axial direction 10X in this invention means a complete agreement between the longer direction of the pin section 3 and the flange section 4 and the tire axial direction 10X as shown in FIG. 4. And additionally, it means that the intersecting angle between the longer direction of the pin section 3 and the flange section 4 and the tire axial direction 10X may be greater than 0° and 20° or smaller. That is, on the tire 10 of the present invention, the intersecting angle between the longer direction (extension direction of the major axes 3A and 4A) of the pin section 3 and the flange section 4 and the tire axial direction 10X is acceptable if it is within a range of 0° to 20° .

Also, the tire axial direction 10X means the direction parallel to the central rotation axis of the tire and orthogonal to the equatorial line 10C.

According to the stud 1 of the first embodiment, the longer direction of the pin section 3 and the flange section 4 faces in the same direction, and the longer direction of the pin section 3 and the flange section 4 faces in a direction different from that of the longer direction of the body section 2. As a result, when fitted on the tire, the stud 1 can improve not only the ice braking performance during vehicular travel but also the anti-stud-loss performance.

That is, if the tire 10 is fitted with the studs 1 in the stud recesses 14b in such a manner that the intersecting angle between the longer direction (extension direction of the major axes 3A) of the pin section 3 and the tire axial direction 10X is within a range of 0° to 20° , then the ice braking performance will be improved because the edges formed by the pair of the long arcs 32, 32 forming the borders between the one-end surface 31 and the peripheral surface 35 of the pin section 3 have a greater tire axial direction 10X component (length) when the vehicle fitted with the tire 10 runs straight ahead.

Also, the greater the difference in length (axis length difference) between the flange section 4 and the body section 2 in the tire circumferential direction 10Y, the lower the bond pressure between the upper part 2U of the body section 2 and the tire rubber (tread rubber) will be, and at the same time the greater the resulting gap between the tire rubber and the lower part of the body section 2 will be. This will reduce the contact area between the tire rubber and the stud, making it easier for the stud to fall out. Hence, if the anti-stud-loss performance is to be improved, it is necessary to make the axis length difference between the flange section 4 and the body section 2 in the tire circumferential direction 10Y smaller and the contact area between the flange section 4 and the tire rubber in the tire axial direction 10X larger.

Accordingly, the tire 10 of the first embodiment has the studs 1 fitted in the stud recesses 14b in such a manner that the longer direction of the pin section 3 and the flange section 4 of the stud 1 faces in the same direction as the tire axial direction 10X. This makes the contact area between the flange section 4 and the tire rubber larger. At the same time, the short direction of the flange section 4 and the longer direction of the body section 2 face in the tire circumferential direction 10Y, which makes the axis length difference between the flange section and the body section in the tire circumferential direction 10Y smaller.

Thus, according to the first embodiment, a tire 10 featuring improved anti-stud-loss performance can be obtained.

One of principal dominant factors in the loss of studs is stud collapse deformation caused by variation in drive input to the tips of the pin sections 3 by repeated accelerated starts. And it is a balance in the contact area and contact pressure of the tire circumferential direction 10Y component of the rubber coming in contact with the surface of the flange section 4 and the surface of the upper part 2U that is the most effective in preventing this stud collapse deformation. To realize this balance, it may be so arranged that the longer direction (major axis direction) of the upper part 2U and the short direction (miner axis direction) of the flange section 4 face in the same direction as the circumferential direction 10Y of the tire. Then the axis length difference between the flange section 4 and the upper part 2U in the tire circumferential direction 10Y will be smaller. And this achieves an excellent balance between the rubber pressure on the short direction end of the flange section 4 and the rubber pressure on the longer direction end of the upper part 2U, thus making it difficult for the studs to collapse.

### Examples

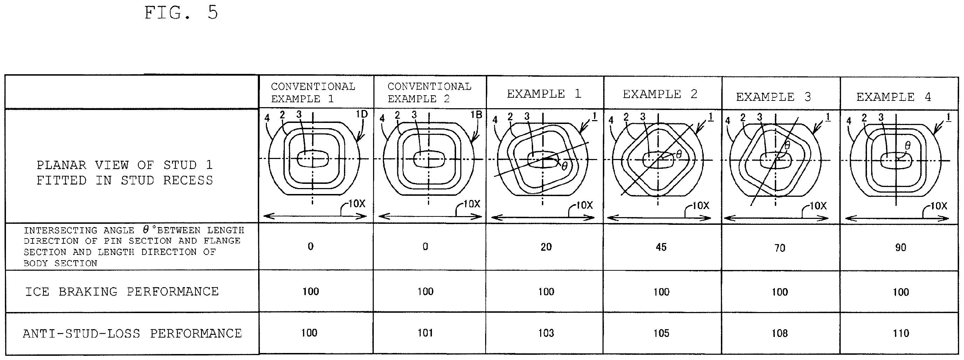

As studs 1 so constructed that the longer direction of the pin section 3 is in agreement with the longer direction of the flange section 4, and at the same time the longer direction of the pin section 3 and the flange section 4 faces in a different direction from the longer direction of the body section 2, the studs 1 whose intersecting angle between the longer direction of the pin section 3 and the flange section 4 and the longer direction of the body section 2 is 20°, 45°, 70°, 90°, respectively, as shown in FIG. 5 were manufactured. Also, tires 1 having these studs 1 fitted in the stud recesses 14b in such a manner that the longer direction of the pin section 3 and the flange section 4 of the studs 1 is in agreement with the tire axial direction 10X (hereinafter referred to as tires 10 of Examples 1 to 4) were manufactured.

Also, studs 1B having the longer direction of the pin section 3, the longer direction of the flange section 4, and the longer direction of the body section 2 in agreement with each other were manufactured. And a tire of Conventional Example 2 having these studs 1B fitted in the stud recesses 14b in such a manner that the longer direction of the pin section 3 and the flange section 4 of the studs 1B is in agreement with the tire axial direction 10X was manufactured.

Furthermore, a tire of Conventional Example 1 having studs 1D having a square shape of the body section 2 orthogonal to the central axis 1C, unlike that of the studs 1B fitted on the tire of Conventional Example 2, was manufactured. That is, the studs 1D shaped such that the extension direction of a pair of sides of the square shape of the body section 2 is in agreement with the longer direction of the pin section 3 and the flange section 4 were manufactured. And a tire of Conventional Example 1 having these studs 1D fitted in the stud recesses 14b in such a manner that the longer direction of the pin section 3 and the flange section 4 of the studs 1D and the extension direction of a pair of sides of the square shape of the body section 2 are in agreement with the tire axial direction 10X was manufactured.

It is to be noted that the stud 1, stud 1B, and stud 1D used in the tests were of the same weight.

The tires of Conventional Examples 1 and 2 and Examples 1 to 4 as described above were subjected to tests to compare their braking performance and anti-stud-loss performance.

The test conditions were as follows:
- Tire size: 205/56R16, internal pressure: 200 KPa
- Braking performance:
   On an ice-covered road course, an ABS sudden braking was performed from a vehicular speed of 30 km/h. The braking distance to a stop was measured for comparison of the ice braking performance of the tires.
- Anti-stud-loss performance:
   The vehicles fitted with new tires were operated a total of about 30,000 km on general icy, snowy, and dry roads, and the numbers of studs lost during the run were counted. The anti-stud-loss performance of the studded tires was evaluated by calculating the ratio between the number of lost studs (A) and the initial number of studs (B).

FIG. 5 shows the ice braking performance and anti-stud-loss performance based on the test results of the tires of Conventional Examples 1 and 2 and Examples 1 to 4.

It is to be noted that the ice braking performance and anti-stud-loss performance as shown in FIG. 5 are the indices for comparative assessment calculated for the tires of Conventional Example 2 and Examples 1 to 4 relative to the performance evaluation result of the tire of Conventional Example 1 as 100. The greater the indices, the higher the ice braking performance and anti-stud-loss performance are.

From the test results, we can see that under the condition of the stud 1, stud 1B, and stud 1D being of the same weight, the tires of Examples 1 to 4 showed improved anti-stud-loss performance in comparison with the tires of Conventional Examples 1 and 2. In particular, the tires of Example 4, namely, the tires fitted with studs 1 whose intersecting angle *θ* between the longer direction of the flange section 4 and the longer direction of the body section 2 is 90°, showed a markedly improved anti-stud-loss performance.

It was found therefore that the tire 10 featuring both excellent ice braking performance and anti-stud-loss performance and especially excellent anti-stud-loss performance can be obtained by using studs 1 whose intersecting angle between the longer direction of the pin section 3 and the flange section 4 and the longer direction of the body section 2 is 90° and constructing a tire 10 fitted with the studs 1 in such a manner that the longer direction of the pin section 3 and the flange section 4 is in agreement with tire axial direction 10X.

Also, the test results revealed that the greater the intersecting angle *θ* between the longer direction of the flange section 4 and the longer direction of the body section 2 is, the more improved the anti-stud-loss performance will be.

### Second Embodiment

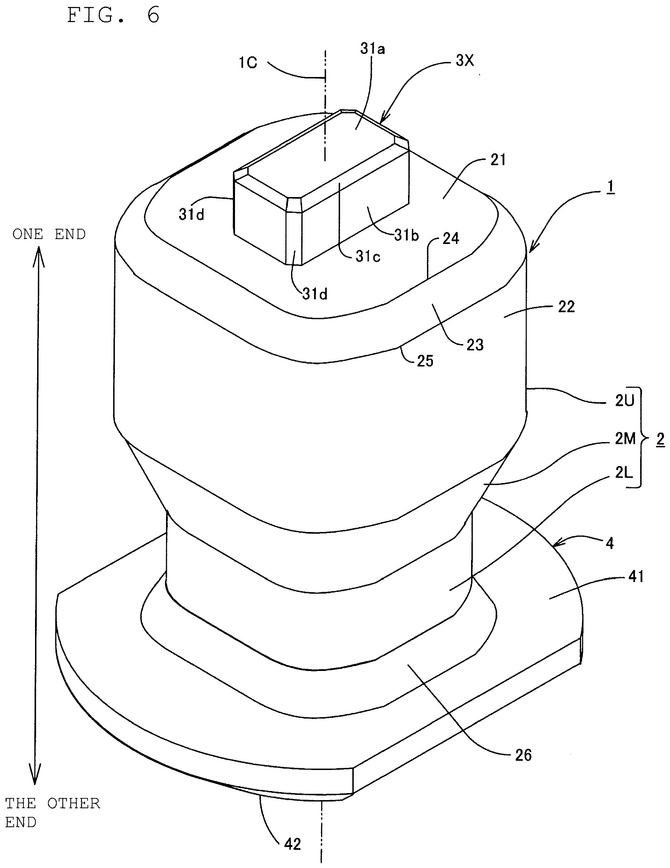

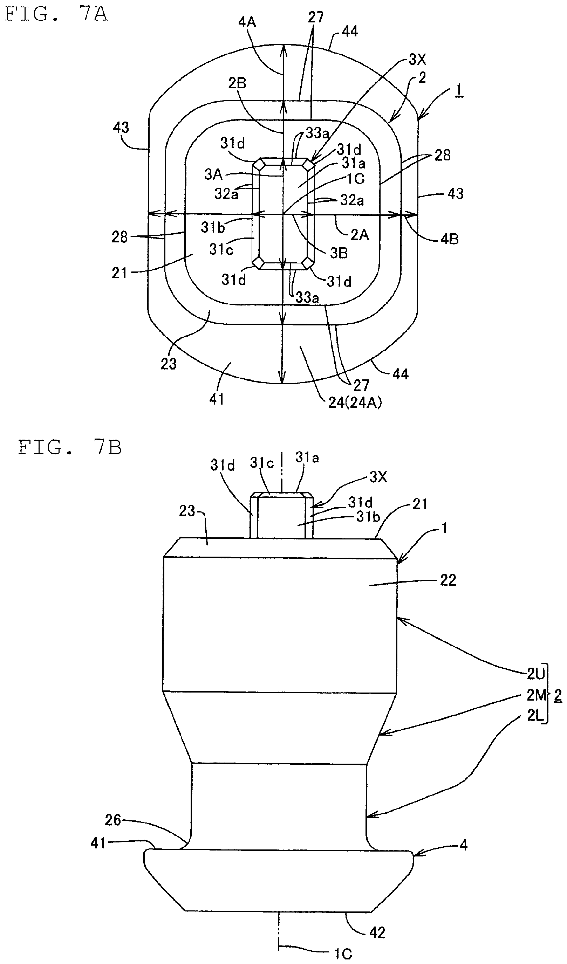

The stud 1 may be provided with a pin section 3X as shown in FIG. 6 and FIG. 7.

The pin section 3X is formed into a columnar body extending along the central axis 1C. The border portion 31c between the one-end surface 31a in the direction along the central axis 1C and the peripheral surface 31b of the pin section 3X is formed into a flat plane connecting the peripheral edge of the one-end surface 31a and the one-end side peripheral edge of the peripheral surface 31b, for instance. Also, the pin section 3X is formed such that the sectional shape thereof orthogonal to the central axis 1C and the shape of the one-end surface 31a in the direction along the central axis 1C thereof is a shape with the corners of a rectangle cut off by the section lines, which are the straight lines connecting the long sides and the short sides of the rectangle. The shape is therefore nearly rectangular, more strictly octagonal. In other words, the pin section 3X has chamfered portions 31d, which are the corner portions removed of a rectangular parallelepiped, and the border portions 31c as the beveled portions on the one-end surface 31a side.

In other words, the pin section 3X is formed into a columnar body having the same sectional shape orthogonal to the central axis 1C for the whole length along the central axis 1C except on the one-end surface 31a side.

That is, the pin section 3X is formed into a shape having the contour lines of the shape orthogonal to the central axis 1C with a pair of long sides 32a, 32a symmetrical with respect to the major axis 3A of the rectangle as the line of symmetry and a pair of short sides 33a, 33a symmetrical with respect to the miner axis 3B of the rectangle as the line of symmetry, as shown in FIG. 7A.

The construction of the stud 1 according to the second embodiment is the same as that of the stud 1 of the first embodiment except for the pin section 3X.

The stud 1 of the second embodiment provides advantageous effects similar to those of the stud 1 of the first embodiment.

### Third Embodiment

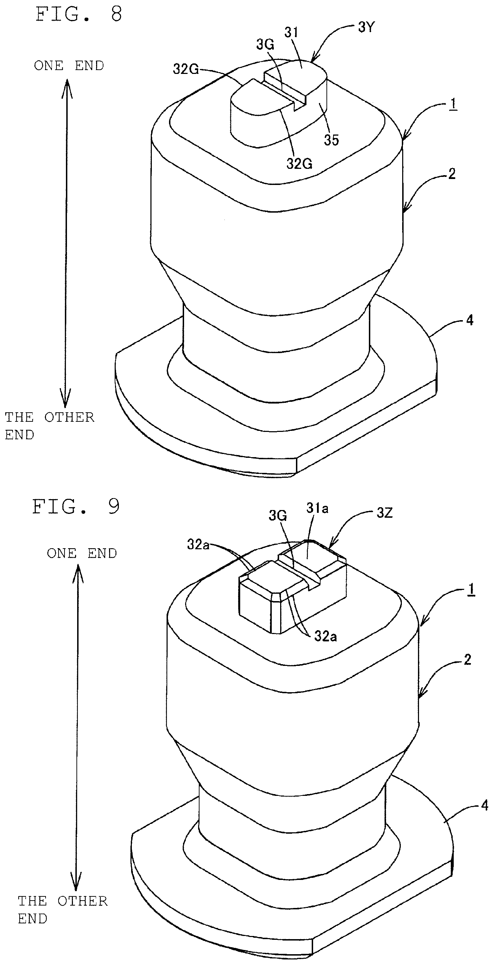

The stud 1 may be provided with a pin section 3Y as shown in FIG. 8.

The pin section 3Y is of such construction as extends from the one-end surface 31 of the stud 1 of the first embodiment in the other-end direction and has a groove 3G extending between the pair of long arcs 32, 32 of the pin section 3 of the stud 1 of the first embodiment.

With the stud 1 equipped with the pin section 3Y having the groove 3G thereon, the ice powder that has been scraped off by the edge components 32G, 32G in the tire axial direction of the pin section 3Y during vehicular travel is more likely to be pushed through the groove 3G and discharged rearward without remaining on the one-end surface 31. As a result, the loss of the edge function of the pin section 3Y due to the ice powder remaining on the one-end surface 31 can be prevented. Thus, the desired ice braking performance can be maintained during vehicular travel.

### Fourth Embodiment

The stud 1 may be provided with a pin section 3Z as shown in FIG. 9.

The pin section 3Z is of such construction as extends from the one-end surface 31a of the stud 1 of the second embodiment in the other-end direction and has a groove 3G extending between the pair of long arcs 32a, 32a of the pin section 3X of the stud 1 of the second embodiment.

The stud 1 of the fourth embodiment provides advantageous effects similar to those of the stud 1 of the third embodiment.

It is to be noted that the body section 2, the pin section 3, and the flange section 4 may be of any actual shapes as long as they are of the shapes having a longer direction and a short direction orthogonal to the central axis 1C. For example, the shapes having a longer direction and a short direction orthogonal to the central axis 1C may be shapes like triangles or polygons.

Also, the foregoing embodiments have exemplified studs 1 having the central axis of the body section 2, the central axis of the pin section 3, and the central axis of the flange section 4 in alignment with each other. However, studs 1 may have the central axis of the body section 2, the central axis of the pin section 3, and the central axis of the flange section 4 not in alignment with each other.

### Description of Reference Numerals

- 1: stud
- 1C: central axis
- 2: body section
- 3: pin section
- 4: flange section
- 10: tire
- 14: tread
- 14a: tread surface
- 14b: stud recess

## Claims

1. A stud (1) to be fitted in a stud recess (14b) formed on a tread surface side of a tire (10) comprising:
a body section (2) in a columnar shape;
a pin section (3) disposed on one end in the direction along the central axis (1C) of the body section (2); and
a flange section (4) disposed on the other end in the direction along the central axis (1C) of the body section (2),
wherein the body section (2) is so formed as to have a longer direction (2A) and a short direction (2B) orthogonal to the central axis (1C) thereof, the pin section (3) is so formed as to have a longer direction (3A) and a short direction (3B) orthogonal to the central axis (1C) thereof, and the flange section (4) is so formed as to have a longer direction (4A) and a short direction (4B) orthogonal to the central axis (1C) thereof,
**characterised in that**:
the longer direction (3A) of the pin section (3) and the longer direction (4A) of the flange section (4) face in the same direction, and the longer direction (3A, 4A) of the pin section (3) and the flange section (4) faces in a different direction from the longer direction (2A) of the body section (2).

2. The stud (1) of claim 1, wherein the intersecting angle (θ) between the longer direction of the flange section (4) and the longer direction of the body section (2) is 90 degrees.

3. A tire having studs (1) as recited in claim 1 or 2 and stud recesses (14b) formed in a tread surface thereof, the flange section (4) and body section (2) of the studs (1) fitted in the stud recesses (14b) and the pin section (3) of the studs (1) protruding above the surface of the tread, wherein the intersecting angle between the longer direction of the pin section (3) and the axial direction (10X) of the tire is in a range from 0 to 20 degrees.

## Patentansprüche

1. Spike (1), der in einer Spikeaussparung (14b) angebracht werden soll, die auf einer Laufflächenseite eines Reifens (10) geformt ist, wobei der Spike Folgendes umfasst:
eine Körpersektion (2) in einer säulenförmigen Gestalt,
eine Stiftsektion (3), die an dem einen Ende in der Richtung entlang der Mittelachse (1C) der Körpersektion (2) angeordnet ist, und
eine Flanschsektion (4), die an dem anderen Ende in der Richtung entlang der Mittelachse (1C) der Körpersektion (2) angeordnet ist,
wobei die Körpersektion (2) so geformt ist, dass sie eine längere Richtung (2A) und eine kurze Richtung (2B), senkrecht zu der Mittellachse (1C) derselben, aufweist, die Stiftsektion (3) so geformt ist, dass sie eine längere Richtung (3A) und eine kurze Richtung (3B), senkrecht zu der Mittellachse (1C) derselben, aufweist, und die Flanschsektion (4) so geformt ist, dass sie eine längere Richtung (4A) und eine kurze Richtung (4B), senkrecht zu der Mittellachse (1C) derselben, aufweist,
**dadurch gekennzeichnet, dass**:
die längere Richtung (3A) der Stiftsektion (3) und die längere Richtung (4A) der Flanschsektion (4) in die gleiche Richtung zeigen und die längere Richtung (3A, 4A) der Stiftsektion (3) und der Flanschsektion (4) in eine von der längeren Richtung (2A) der Körpersektion (2) verschiedene Richtung zeigen.

2. Spike (1) nach Anspruch 1, wobei der Schnittwinkel (θ) zwischen der längeren Richtung der Flanschsektion (4) und der längeren Richtung der Körpersektion (2) 90 Grad beträgt.

3. Reifen, der Spikes (10) nach Anspruch 1 oder 2 und Spikeaussparungen (14b), die in einer Lauffläche desselben geformt sind, aufweist, wobei die Flanschsektion (4) und die Körpersektion (2) der Spikes (1) in den Spikeaussparungen (14b) eingepasst sind und die Stiftsektion (3) der Spikes (1) oberhalb der Oberfläche der Lauffläche vorspringt, wobei der Schnittwinkel zwischen der längeren Richtung der Stiftsektion (3) und der axialen Richtung (10X) des Reifens in einem Bereich von 0 bis 20 Grad liegt.

## Revendications

1. Goujon (1), destiné à être fixé dans un évidement de goujon (14b) formé sur un côté de la bande de roulement d'un bandage pneumatique (10), comprenant :
une section de corps en forme de colonne (2) ;
une section de goupille (3) disposée sur une extrémité, dans la direction allant le long de l'axe central (1C), de la section de corps (2) ; et
une section de bride (4) disposée sur l'autre extrémité, dans la direction allant le long de l'axe central (1C), de la section de corps (2) ;
dans lequel la section de corps (2) est formée de sorte avoir une direction plus longue (2A) et une direction courte (2B) orthogonale à son axe central (IC), la section de goupille (3) étant formée de sorte à avoir une direction plus longue (3A) et une direction courte (3B) orthogonale à son axe central (1C), et la section de bride (4) étant formée de sorte à avoir une direction plus longue (4A) et une direction courte (4B) orthogonale à son axe central (1C) ;
**caractérisé en ce que** :
la direction plus longue (3A) de la section de goupille (3) et la direction plus longue (4A) de la section de bride (4) sont orientées dans la même direction, la direction plus longue (3A, 4A) de la section de goupille (3) et de la section de bride (4) étant orientée dans une direction différente de celle de la direction plus longue (2A) de la section de corps (2).

2. Goujon (1) selon la revendication 1, dans lequel l'angle d'intersection (θ) entre la direction plus longue de la section de bride (4) et la direction plus longue de la section de corps (2) correspond à 90 degrés.

3. Bandage pneumatique comportant des goujons (1) selon les revendications 1 ou 2, et des évidements de goujon (14b) formés dans sa surface de bande de roulement, la section de bride (4) et la section de corps (2) des goujons (1) étant ajustés dans les évidements de goujon (14b) et la section de goupille (3) des goujons (1) débordant au-dessus de la surface de la bande de roulement, dans lequel l'angle d'intersection entre la direction plus longue de la section de goupille (3) et la direction axiale (10X) du bandage pneumatique est compris dans un intervalle allant de 0 à 20 degrés.
